# DEMANDE DE BREVET EUROPEEN

(11) **EP 4 183 502 A1**
(43) Date de publication de la demande: **24.05.2023**
(21) Numéro de dépôt: 22208506.0
(22) Date de dépôt: 21.11.2022
(51) Int. Cl.: B22F 1/052, B22F 10/28, B33Y 10/00, B33Y 70/10, B33Y 80/00, C22C 1/04, C22C 1/05, B22F 9/04, C22C 29/16, C22C 32/00

(54) **PROCÉDÉ DE FABRICATION DE PIÈCE D'UNE ALLOYE HEA/CA**

(30) Priorité: 19.11.2021 FR 2112260
(71) Demandeur: Commissariat à l'énergie atomique et aux énergies alternatives, 75015 Paris (FR)
(72) Inventeur: PEYROUZET, Florian, 38054 GRENOBLE Cedex 09 (FR); MARCHAIS, Bastien, 38054 GRENOBLE Cedex 09 (FR); OPPRECHT, Mathieu, 38054 GRENOBLE Cedex 09 (FR)
(74) Mandataire: Brevalex

(57) **Abrégé**

Procédé de fabrication d'une pièce en alliage à haute entropie ou en alliage multicomposants par fabrication additive comprenant une étape au cours de laquelle une couche d'un mélange de poudres est localement fondue puis solidifiée, caractérisé en ce que le mélange de poudres comprend :
- des premières particules en un alliage à haute entropie ou en un alliage multicomposants, et
- des deuxièmes particules en un nitrure métallique choisi parmi un nitrure d'aluminium, un nitrure de cuivre, un nitrure de chrome, un nitrure de silicium, un nitrure de bore, un nitrure de tungstène, un nitrure de fer, un nitrure de nickel, un nitrure de manganèse ou en un de leurs mélanges.

## Description

### DOMAINE TECHNIQUE

La présente invention se rapporte au domaine général de la fabrication de pièce en alliage à haute entropie (HEA) ou en alliage multicomposants (CCA).

L'invention concerne un procédé de fabrication d'une pièce en un tel alliage.

L'invention est particulièrement intéressante puisqu'elle permet d'améliorer la résistance mécanique des alliages à haute entropie et des alliages CCAs, notamment ceux de la famille 3d TM HEA/CCA.

L'invention trouve des applications dans de nombreux domaines industriels, et notamment dans les domaines de l'énergie, du transport, celui du médical ou encore de la défense.

### ÉTAT DE LA TECHNIQUE ANTÉRIEURE

Les alliages à haute entropie (HEA) sont composés d'au moins cinq éléments principaux en proportion équiatomique ou équivalente. L'entropie configurationnelle de ces alliages est maximisée et stabilise ainsi une unique solution solide concentrée, de structure cristallographique cubique à face centrée (CFC), cubique centrée (CC) ou hexagonale compacte (HCP) par exemple. La microstructure des alliages HEA est monophasée. Cette unique phase permet d'atteindre de nouvelles propriétés mécaniques.

Aujourd'hui les recherches s'étendent jusqu'aux alliages multicomposants qui comportent au moins 3 éléments majoritaires en proportion équiatomique (dénommés aussi CCA pour 'complex concentrated alloy' ou MPEA pour Multi-Principal Element Alloy (MPEA)). Ces alliages n'aboutissent pas forcément à la formation d'une solution solide monophasée.

Les alliages à haute entropie et multicomposants peuvent être mis en forme par des procédés de Fabrication Additive (FA). Les procédés concernés ont pour point commun d'utiliser la matière première sous forme de poudres, et une mise en forme de l'alliage en voie liquide. Les procédés concernés incluent, sans caractère limitatif, les procédés de fusion sur lit de poudre (FLP ou PBF pour Powder Bed Fusion en terminologie anglaise, que ce soit de la fusion laser ou de la fusion par faisceau d'électrons), et de dépôt de matière sous énergie concentrée (DED pour Directed Energy Deposition ou LENS^{©}).

Parmi ces alliages HEA/CCAs, la famille de sous-structure 3d contenant des métaux de transition, et notamment Ti, V, Cr, Mn, Fe, Co, Ni, Cu auxquels on associe souvent Al est étudiée pour ses propriétés mécaniques innovantes.

Plusieurs approches ont déjà permis l'amélioration des propriétés mécaniques d'alliages de type HEA/CCA.

Par exemple, il est connu que la teneur en Al influe sur la dureté de l'alliage. Dans l'alliage AlₓCoCrFeNi, l'ajout d'aluminium permet d'augmenter la dureté [1, 2].

Une autre solution consiste à ajouter des nanoparticules plus dures que la matrice par mécanosynthèse à la poudre entrante (processus d'ajout dit exogène). Autrement dit, les particules d'ajout sont intégrées directement dans les particules d'HEA.

Par exemple, Li *et al.* ont ajouté des concentrations importantes (5 - 12mass%) de TiN à un alliage CoCrFeMnNi. L'utilisation du Ti est notamment connue pour aboutir à des structures équiaxes pour des HEAs mis en forme par fabrication additive. D'après cette étude, la contrainte à rupture a été multipliée par deux. Cependant, l'allongement diminue [3].

Une autre solution consiste à ajouter des éléments chimiques lors de l'étape d'atomisation de la poudre entrante (processus d'ajout dit endogène). Ces éléments peuvent se combiner pour former des particules germinantes (utiles au raffinement de la microstructure) et/ou former des particules durcissantes, ou bien se retrouver piéger en solution solide lors du refroidissement de l'alliage imprimé par un procédé de fabrication additive.

Par exemple, Park *et al.* ont ajouté 1%atomique de C dans leur alliage CoCrFeMnNi obtenu par FLLP. Des intermétalliques sous forme de carbures se forment. Une amélioration des propriétés mécaniques obtenues par essais de traction a pu être observée. Cependant, la présence de ces carbures fragiles peut diminuer les propriétés en fatigue et/ou l'allongement des matériaux ainsi obtenus [4].

Song *et al.* ont ajouté 1,8 %at de N par atomisation sous azote (processus d'ajout endogène) à leur alliage CoCrFeNi mis en forme par fusion laser sur lit de poudre. Une amélioration notable des propriétés mécaniques telles que l'écrouissage ou encore la résistance à la traction de l'alliage a pu être constatée par rapport au même alliage sans azote ainsi qu'une élévation de l'allongement. Néanmoins dans cette méthode deux lots de poudres ont été atomisés pour comparaison. Or, des hétérogénéités de composition, mais également physiques peuvent préexister entre les lots : par exemple la teneur en nickel peut varier d'un lot à l'autre [5].

### EXPOSÉ DE L'INVENTION

Un but de la présente invention est de proposer un procédé de fabrication additive de pièces en alliage à haute entropie (HEA) ou en alliage multicomposants (CCA) permettant de remédier au moins en partie aux inconvénients de l'art antérieur et permettant d'obtenir une pièce ayant de bonnes propriétés mécaniques.

Pour cela, la présente invention propose un procédé de fabrication d'une pièce en alliage à haute entropie ou en alliage multicomposants par fabrication additive comprenant une étape au cours de laquelle une couche d'un mélange de poudres est localement fondue puis solidifiée, le mélange de poudres comprenant :
- des premières particules en un alliage HEA ou CCA, et
- des deuxièmes particules nitrurées en un nitrure métallique choisi parmi un nitrure d'aluminium, un nitrure de cuivre, un nitrure de chrome, un nitrure de silicium, un nitrure de bore, un nitrure de tungstène, un nitrure de fer, un nitrure de nickel, un nitrure de manganèse ou en un de leurs mélanges.

L'invention se distingue fondamentalement de l'art antérieur par l'ajout exogène d'éléments grâce à une étape de mélange en voie sèche, permettant l'amélioration des propriétés mécaniques de l'alliage final, notamment de bonnes propriétés en traction. De plus, contre toute attente, l'augmentation des contraintes élastique et à rupture ne se fait pas au détriment de l'allongement. Il est, en effet, largement connu de la littérature que, classiquement, ces grandeurs sont relativement inversement proportionnelles.

Il n'était *a priori* pas évident que les particules nitrurées restent accrochées aux particules de poudre d'HEA ou de CCA au cours du mélange et au cours de l'impression.

Lors du passage à l'état liquide des poudres d'HEA, les particules nitrurées se dissolvent dans le bain liquide et/ou restent sous forme de précipités durcissants.

Dans le cas d'une dissolution des particules nitrurées les atomes d'azote sont libérés et se mettent en position interstitielle (la maille est alors distordue, créant ainsi des amas de dislocations au niveau de ces atomes en solution solide) et/ou se recombinent pour former des précipités durcissants; ces effets contribuent à durcir la matrice. Parallèlement, les atomes libérés (autres que les atomes d'azote) entrainent une modification de la composition chimique de la phase mère HEA, permettant de se déplacer sur l'isoplèthe de composition et ainsi favoriser la précipitation d'une structure peu à peu CC par exemple (CFC->CFC+CC->CC).

Les éléments formant les particules nitrurées font partie de la pièce finale soit sous forme de précipités soit sous forme d'atomes en position interstitielle (en solution solide).

Les deuxièmes particules sont de préférence choisies parmi CuₓN_{y} comme par exemple Cu₃N, CrₓN_{y} comme par exemple CrN, SiₓN_{y} comme par exemple Si₃N₄, BₓN_{y} comme par exemple BN, WₓN_{y} comme par exemple W₂N ou WN, FeₓN_{y} comme par exemple Fe₂N ou Fe₄N, NiₓN_{y} comme par exemple Ni₃N, ou MnₓN_{y} comme par exemple Mn₄N.

x et y sont les quantités stœchiométriques d'atomes.

Avantageusement, les deuxièmes particules sont en AlₓN_{y} et les rapports stœchiométriques x/y des atomes de Al et de N sont supérieurs à 0 et inférieur ou égal à 5, préférentiellement supérieur à 0 et inférieur ou égal à 2, préférentiellement de 1.

Avantageusement, les premières particules ont une plus grande dimension entre 10µm et 120µm, et de préférence entre 20µm et 65µm. Les inventeurs ont constaté une amélioration significative de la contrainte élastique en lien avec l'ajout de nitrure.

Avantageusement, l'alliage est un alliage de la famille 3d TM.

Avantageusement, l'alliage à haute entropie contient de l'Al et quatre éléments choisis parmi Co, Cr, Fe, Ni, Ti, Cu et Mn.

De manière encore plus avantageuse, l'alliage à haute entropie est AlₓCoCrFeNi, AlₓCoCuFeNi, AlₓCoCrFeTi, AlxCrCuFeNi, AlxCrFeCuCo AlxCrCoCuFeNi ou AlₓCoCrFeTi, AlxCoCrFeTiNi, ou AlxCoCrFeMnNi avec plus préférentiellement avec x compris entre 0,1 et 3.

Avantageusement, le mélange de poudres comprend entre 0,5% et 4% massique de deuxièmes particules, et de préférence entre 0,5% et 3% massique.

Avantageusement, les deuxièmes particules ont une plus grande dimension entre 5nm et 5000nm, préférentiellement 100 et 1000 nm, encore plus préférentiellement 200 et 600 nm.

Avantageusement, les deuxièmes particules sont en nitrure d'aluminium, en nitrure de chrome ou un mélange de ces deux nitrures.

Avantageusement, le procédé de fabrication additive est un procédé de fusion laser sur lit de poudres ou un procédé de fusion sélective par faisceau d'électrons sur lit de poudres.

Le procédé de Fusion Laser sur Lit de Poudres (FLLP) (ou en terminologie anglo-saxonne Laser Powder Bed Fusion (LPBF)) peut comprendre les étapes suivantes :
a) fournir une poudre comprenant des particules en alliage HEA ou CCA,
b) déposer une couche de poudre sur un substrat solide ou sur une couche de poudre sous-jacente,
c) faire fondre localement la couche de poudre déposée par balayage d'un faisceau laser, de manière à former un bain fondu,
d) refroidir le bain fondu de manière à le solidifier,
   répéter plusieurs fois le cycle comprenant les étapes b), c) et d) moyennant quoi on forme une pièce en alliage HEA ou CCA,
   les deuxièmes particules étant ajoutées avant l'étape c), et de préférence avant l'étape b).

Le procédé peut être mis en œuvre quel que soit le moyen d'ajout des deuxièmes particules nitrurées :
- par greffage : la poudre fournie à l'étape a) comprend les particules en alliage HEA fonctionnalisées par des deuxièmes particules ; ce qui permet de pouvoir facilement modifier le rapport volumique entre les poudres au moment du mélange de poudre.
- par inclusion: les deuxièmes particules sont ajoutées par mécanosynthèse.

Avantageusement, le mélange de poudres est réalisé dans un mélangeur dynamique 3D.

Le procédé présente de nombreux avantages :
- être simple à mettre en œuvre : le mélange est réalisé en voie sèche, rapide, et il est facile à mettre en œuvre,
- être peu coûteux, et donc intéressant d'un point de vue industriel,
- pouvoir stocker/manipuler facilement les poudres,
- être facilement adaptable à une large gamme d'alliage HEA et CCA, (et deuxièmes particules)
- pouvoir utiliser les paramètres classiquement utilisés dans les procédés de fabrication additive,
- obtenir des pièces avec des propriétés mécaniques améliorées et une conservation de l'allongement,
- pouvoir obtenir de nouvelles perspectives microstructurales,
- pouvoir investiguer différentes compositions proches, par exemple en incrémentant la quantité d'éléments chimiques de manière contrôlée, pour trouver les compositions conduisant à des pièces ayant les meilleures propriétés mécaniques.

L'invention concerne également une pièce en alliage HEA ou CCA obtenue par un tel procédé. La pièce peut comprendre des précipités de nitrures métalliques, par exemple des nitrures d'aluminium, nitrures de cuivre, nitrures de chrome, nitrures de silicium, nitrures de bore, nitrures de tungstène, nitrures de fer, nitrures de nickel, nitrures de manganèse ou en un de leurs mélanges.

Avantageusement, les nitrures métalliques représente entre 0,5% massique et 4% massique de l'alliage, et de préférence entre 0,5% et 3% massique par rapport à la masse totale de l'alliage.

La pièce comprend, par exemple, des particules nitrurées ayant une taille comprise entre 1 et 500 nm et de préférence entre 2 et 100nm.

Avantageusement, la résistance maximale à la traction de la pièce est comprise entre 100 et 3000 MPa, voire entre 600 et 2000 MPa.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 est un cliché obtenu au microscope électronique à balayage de particules en alliage HEA, selon un mode de réalisation de l'invention.
La figure 2 un cliché obtenu au microscope électronique à balayage de particules en AIN, selon un mode de réalisation de l'invention.
La figure 3 est un cliché obtenu au microscope électronique à balayage de particules en alliage HEA fonctionnalisées par des particules en AIN, selon un mode de réalisation de l'invention.
La figure 4 est un autre cliché obtenu au microscope électronique à balayage de particules en alliage HEA fonctionnalisées par des particules en AIN, selon un mode de réalisation de l'invention.
La figure 5A est un cliché correspondant à la zone encadrée de la figure 4,
Les figures 5B à 5G sont des analyses élémentaires de la zone représentée à la figure 5A.

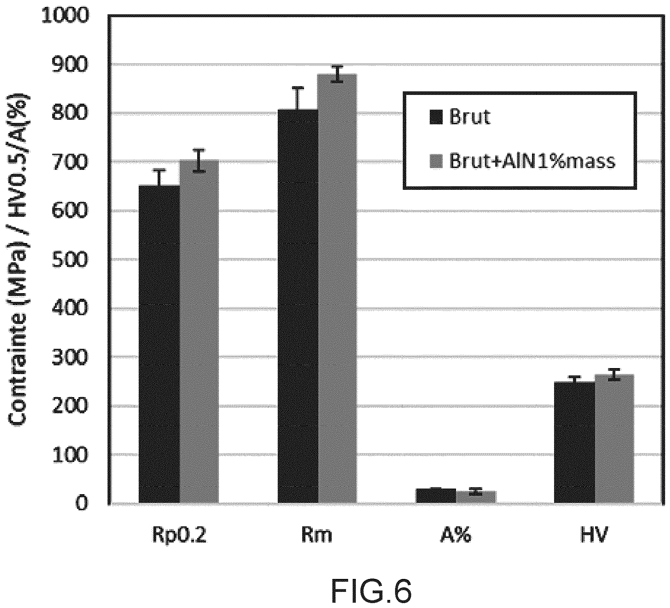

La figure 6 est un graphique représentant la limite élastique (Rp0.2), la limite maximale d'écoulement (Rm), l'élongation (A%) et la micro-dureté (HV) d'un alliage HEA classique (noir) et d'un alliage HEA modifié obtenu selon l'invention (gris).

### EXPOSÉ DÉTAILLÉ DE MODES DE RÉALISATION PARTICULIERS

Le procédé de fabrication additive d'une pièce en alliage à haute entropie ou d'un multicomposants comprend les étapes suivantes :
i) fournir une poudre de premières particules en alliage à haute entropie HEA (pour 'high entropy alloys') ou en alliage multicomposants CCA (pour 'complex concentrated alloys'),
ii) fournir une poudre de deuxièmes particules,
iii) imprimer une pièce en alliage HEA par fabrication additive, à partir d'un mélange contenant les premières particules et les deuxièmes particules,
iv) éventuellement réaliser un traitement thermique sur la pièce imprimée à une température inférieure à la température de fusion de l'alliage, préférentiellement à une température supérieure à 500°C.

Les deuxièmes particules représentent, de préférence, de 0,5% à 4% massique, et encore plus préférentiellement de 0,5 à 3% massique par rapport à la masse totale du mélange de poudres.

Selon un mode de réalisation avantageux, les premières particules ont une plus grande dimension entre 10µm et 120µm et les deuxièmes particules ont une plus grande dimension entre 5nm et 5000nm et, de préférence, entre 100nm et 1000nm, encore plus préférentiellement entre 200nm et 600nm.

De préférence, les premières particules sont sensiblement sphériques et leur plus grande dimension est leur diamètre.

De préférence, les premières particules sont des particules HEA ou CCA contenant de l'aluminium.

On choisira par exemple des particules en CCA de la famille 3d TM contenant de l'aluminium ou des particules en HEA de la famille 3d TM contenant de l'aluminium.

De préférence, les premières particules sont des particules en HEA de la famille 3d TM contenant de l'Al et quatre éléments parmi Co, Cr, Fe, Ni, Ti, Cu, Mn.

Par exemple, on choisira des premières particules en AlₓCoCrFeNi, AlₓCoCuFeNi, AlxCrCuFeNi, AlxCrFeCuCo AlxCrCoCuFeNi, AlₓCoCrFeTi, AlxCoCrFeTiNi, ou AlxCoCrFeMnNi plus préférentiellement avec x compris entre 0,1 et 3. Par exemple, on choisira Al_{0,3}CoCrFeNi.

Selon un premier mode de réalisation avantageux, les deuxièmes particules sont choisies parmi AlₓN_{y}, par exemple AIN, CuₓN_{y} comme par exemple Cu₃N, CrₓN_{y} comme par exemple CrN, SiₓN_{y} comme par exemple Si₃N₄, BₓN_{y} comme par exemple BN, WₓN_{y} comme par exemple W₂N ou WN, FeₓN_{y} comme par exemple Fe₂N ou Fe₄N, NiₓN_{y} comme par exemple Ni₃N, ou MnₓN_{y} comme par exemple Mn₄N.

Il peut également s'agir d'un de leurs mélanges.

Selon un deuxième mode de réalisation avantageux, il peut s'agir d'un composé de formule AlₓM_{y}N, avec M un élément métallique, préférentiellement un métal de transition, de préférence AlₓCr_{y}N par exemple AlCrN.

Ces différents modes de réalisation et leur combinaison (utilisation mélange de poudres de type AlₓM et/ou composé de type AlₓM_{y}N) permettent de jouer sur différents isoplèthes de composition tout en insérant par voie solide de l'azote à l'alliage.

De préférence, on choisit des deuxièmes particules en nitrure d'aluminium.

Avantageusement, les particules de HEA sont fonctionnalisées par les particules de nitrure. Les deuxièmes particules recouvrent les premières particules. Les deuxièmes particules sont à la surface des premières particules.

Le mélange est de préférence réalisé par voie sèche.

Les premières particules et les deuxièmes particules peuvent être mélangées au mélangeur dynamique 3D, par exemple avec un mélangeur Turbula^{®}. Alternativement, il pourrait s'agir d'un procédé de mécano-synthèse.

Lors de l'étape iii), on imprime la pièce en alliage d'HEA par fabrication additive. Les machines de dépôt utilisées pour les procédés de fabrication additive comprennent, par exemple, un système d'alimentation en poudre (« Powder delivery system »), un dispositif d'étalement et d'homogénéisation de la surface de la poudre (« Roller » ou « Blade »), un faisceau (par exemple un faisceau laser infrarouge à une longueur d'onde de 1060nm environ), un scanner pour diriger le faisceau, et un substrat (aussi appelé plateau) qui peut descendre verticalement (selon un axe Z perpendiculaire au lit de poudre).

Selon une première variante de réalisation, l'étape iii) est avantageusement réalisée par fusion laser sur lit de poudres. Elle peut comprendre les étapes suivantes :
a) déposer le mélange de poudres de manière à former une couche de poudre,
b) faire fondre localement la couche de mélange de poudres, par balayage d'un faisceau laser, de manière à former un bain fondu,
c) refroidir le bain fondu pour le solidifier, le bain fondu solidifié étant constitutif des premiers éléments des pièces à construire.

Selon une autre variante de réalisation, l'étape iii) peut être réalisée par fusion sélective par faisceau d'électrons. Elle peut comprendre les étapes suivantes :
a) déposer le mélange de poudres de manière à former une couche de poudre,
b) faire fondre localement la couche de mélange de poudres, par balayage d'un faisceau d'électrons, de manière à former un bain fondu,
c) refroidir le bain fondu pour le solidifier, le bain fondu solidifié étant constitutif des premiers éléments des pièces à construire.

Dans ces variantes, les deuxièmes particules peuvent être ajoutées par greffage ou inclusion.

On utilise un faisceau suffisamment énergétique pour faire fondre les premières particules. On obtient ainsi un bain fondu comprenant une première surface et une deuxième surface. La première surface est en contact avec un substrat solide ou avec la couche de poudres sous-jacente. La deuxième surface est une surface libre faisant interface avec l'atmosphère de la chambre de fabrication. Les deux surfaces délimitent un volume, appelé piscine de fusion.

La couche déposée peut être localement fondue ou totalement fondue. Il est possible de former une zone fondue ou une pluralité de zones fondues.

L'étape de fusion permet de créer des motifs fondus dans la couche du mélange de poudres. Une ou plusieurs zones de particules fondues peuvent être réalisées pour former le motif désiré. Les particules formant le motif fondent complètement de manière à conduire, lors de la solidification (étape c), à une ou plusieurs zones solidifiées en un alliage d'HEA.

Les étapes a), b) et c) sont répétées au moins une fois de manière à former au moins une autre zone solidifiée sur la première zone solidifiée. Le procédé se répète jusqu'à obtenir la forme finale de la pièce, la première couche de mélange de poudres étant formée sur un substrat (aussi appelé plateau).

A titre illustratif et non limitatif, les paramètres du procédé de fabrication de la pièce imprimée par fusion laser sur lit de poudre sont :
- entre 50 et 500W pour la puissance laser,
- entre 100 et 5000 mm/s pour la vitesse laser,
- entre 25 et 120µm pour la distance entre deux espaces vecteurs (« hatch » en terminologie anglo-saxone),
- entre 15 et 100µm pour l'épaisseur de couche.

A titre illustratif et non limitatif, les paramètres du procédé de fabrication de la pièce imprimée par fusion par faisceau d'électrons sur lit de poudre sont :
- entre 50 et 3000W pour la puissance du faisceau d'électrons,
- entre 100 et 8000 mm/s pour la vitesse du faisceau d'électrons,
- entre 25 et 150µm pour la distance entre deux espaces vecteurs (« hatch » en terminologie anglo-saxone),
- entre 40 et 150µm pour l'épaisseur de couche.

L'ensemble peut être confiné dans une enceinte thermiquement fermée et inertée, pour contrôler l'atmosphère, mais aussi pour éviter la dissémination des poudres. Idéalement l'atmosphère d'impression est sous argon ou sous azote.

Les poudres non solidifiées sont ensuite évacuées et la pièce finale est détachée du substrat.

La pièce peut être ensuite avantageusement soumise à un traitement thermique (étape iv).

Le traitement thermique (ou éventuellement une température d'utilisation adaptée) permettrait de se déplacer sur le diagramme de phase de l'alliage, favorisant par exemple la germination L1₂, B2, CC, sigma ou AIN grâce aux modifications élémentaires induites.

Pour contrôler cette précipitation, l'utilisation d'un plateau chauffant lors de l'impression, ou d'une autre technique de chauffage constitue une solution possible.

Par exemple, le système AlₓCoCrFeNi offre de nombreuses perspectives, de par les multiples phases atteignables à l'aide d'un recuit (in situ ou post-impression). Par exemple, le recuit et la teneur en Al peuvent favoriser la formation de la phase L1₂ et B2 (CC ordonnée) [6].

Cette étape de recuit peut réduire les contraintes internes et améliorer les propriétés mécaniques. La température est, de préférence, inférieure à la température de fusion de l'alliage, par exemple inférieure à 1400°C pour Al_{0,3}CoCrFeNi. Préférentiellement, le traitement thermique est réalisé à une température d'au moins 500°C.

La pièce ainsi obtenue (après les étapes d'impression et de traitement thermique) présente une fine microstructure et de bonnes propriétés mécaniques, notamment pour ses propriétés en traction.

On observe, au sein de l'alliage formé, une augmentation du pourcentage massique en éléments constituants les deuxièmes particules confirmant leur intégration dans la pièce obtenue par le procédé précédemment décrit. Par exemple, pour des deuxièmes particules en nitrure d'aluminium, on observe une augmentation du pourcentage massique en N et Al au sein de l'alliage formé.

Dans la pièce obtenue, une éventuelle précipitation sous forme de nitrures dispersés est possible,.

La taille des précipités nitrurés (par exemple AIN) de la pièce est comprise entre 1 et 500nm et de préférence entre 2 et 100 nm.

La contrainte en traction d'une pièce obtenue par un tel procédé est, avantageusement, comprise entre 100 et 3000 MPa, préférentiellement entre 600 et 2000 MPa.

L'invention ouvre de nouvelles possibilités microstructurales et structurales.

Bien que cela ne soit aucunement limitatif, l'invention trouve particulièrement des applications dans le domaine de l'énergie, du transport, celui du médical ou encore de la défense.

### Exemple illustratif et non limitatif d'un mode de réalisation :

Nous allons maintenant décrire plus en détail la fabrication de pièces en alliage HEA. Les pièces sont des cubes de 10mm^{∗}10mm^{∗}10mm et des éprouvettes de traction de 60mm^{∗}12mm^{∗}12mm.

Les pièces sont obtenues à partir d'un mélange comprenant une poudre de particules HEA et 1%massique de particules d'AIN.

Les particules HEA sont en un alliage dénommé Al_{0,3}CoCrFeNi formé majoritairement de Al, Co, Cr, Fe et Ni.

La granulométrie de la poudre HEA utilisée est la suivante : d10=20µm, d50=29µm et d90=43µm.

Les pièces sont fabriquées par un procédé d'impression par fusion laser sur lit de poudre. Environ 5kg de mélange a été utilisé.

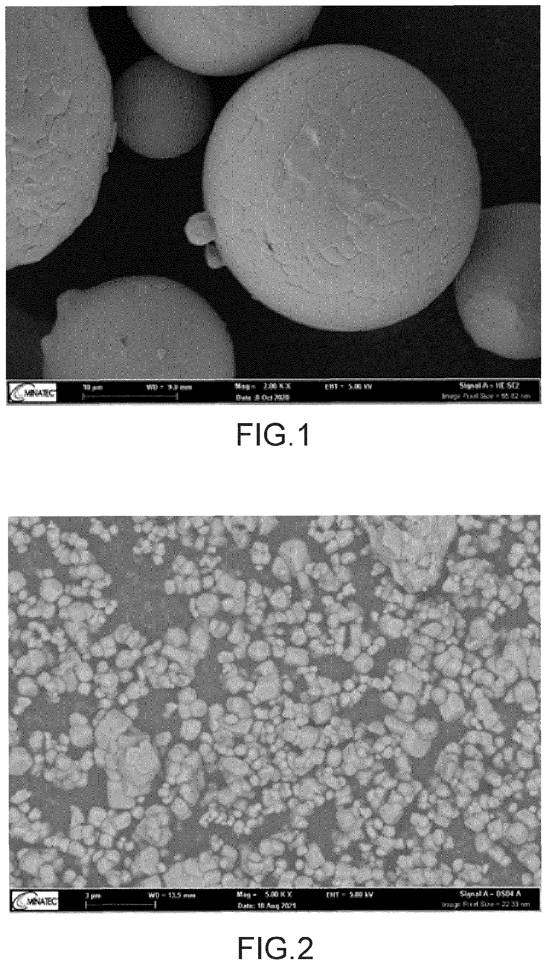

Les particules HEA ont été caractérisées au MEB. Les particules sont sphériques (figure 1).

La poudre d'AIN (x=y=1) a aussi été caractérisée au MEB (figure 2).

Le mélange est réalisé en boîte à gant nano dans un pot (6,5L) contenant :
- 5000 g de la poudre d'HEA,
- 50 g de la poudre de AIN (pour un mélange à 1% massique),
- 250 mL de billes de Zircone de diamètre 5 mm.

Le mélange est passé au Turbula^{®} pendant 30 h.

Le pot est alors de nouveau rentré en boîte à gant nano afin de tamiser grossièrement (1mm). Le but est de récupérer les billes de Zircone nécessaires à l'homogénéisation du mélange.

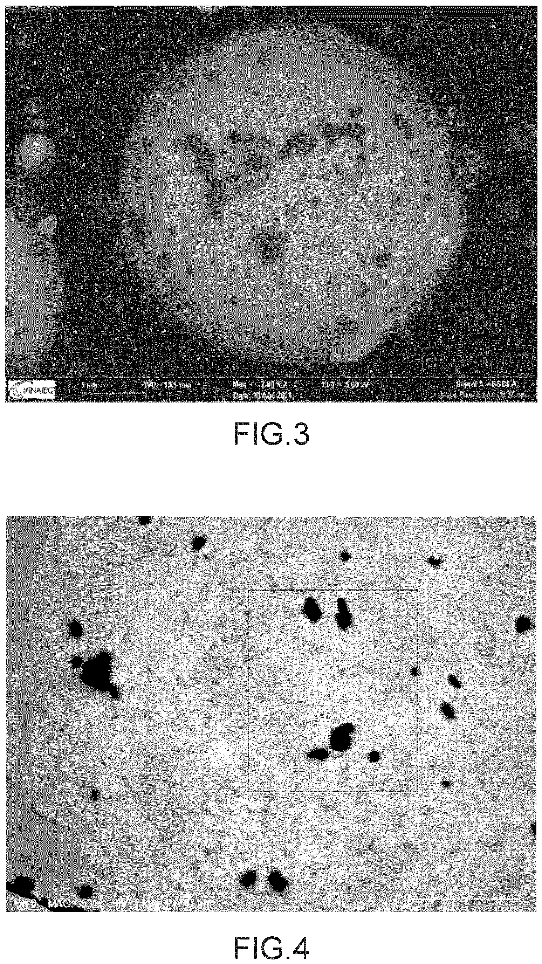

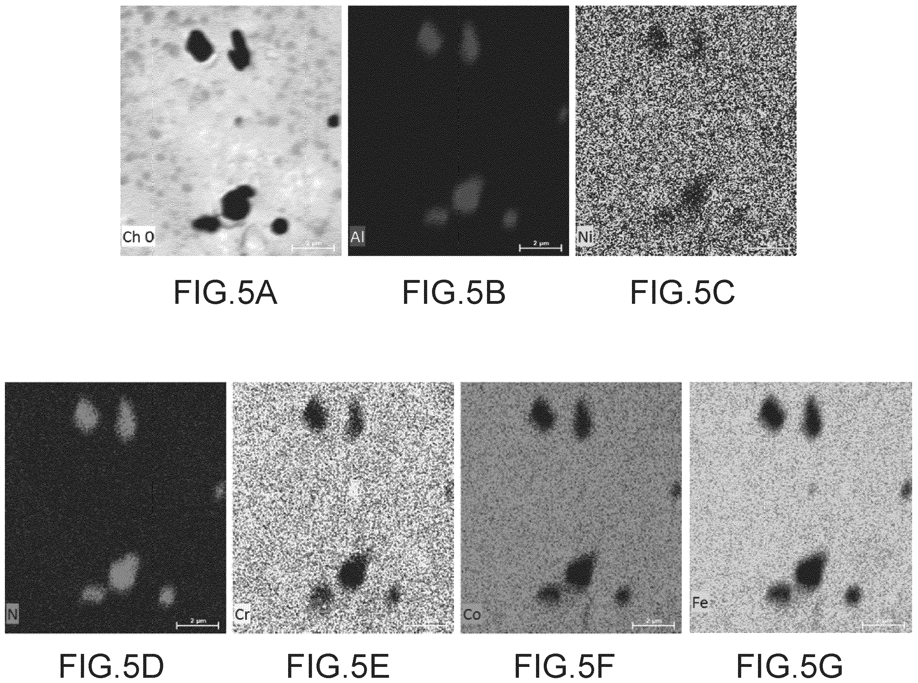

Les figures 3 et 4 sont des images obtenues au MEB du mélange de poudres. Ces images confirment la bonne accroche des particules d'AIN sur les poudres d'HEA. La nature chimique des différents éléments présents a également été étudiée. La figure 5A est l'image MEB-BSE de la zone étudiée en figure 4. Les figures 5B à 5G montrent la présence de différents éléments (Al, Ni, N, Cr, Co, Fe respectivement) dans le mélange.

Lors d'un ajout de 1% massique de AIN, la quantité de N dans l'alliage passe de 0,048 ±0,006 à 0,121 ±0,008 et la quantité d'Al passe de 3,6 ±0,2 à 3,9 ± 0,3 (pourcentages massiques).

Une fois ces étapes réalisées, le mélange est utilisé pour fabriquer les pièces avec la machine d'impression 3D.

Les conditions FLLP permettant d'obtenir les cubes les plus denses sont :
- Puissance laser : 150-250 W,
- Vitesse laser : 500-2000 mm/s,
- Espace vecteur : 40-100 µm,
- Epaisseur de couche (lit de poudre) : 20-30 µm.

Un ajout de 1% massique d'AIN pour cette poudre d'HEA permet d'améliorer la contrainte élastique d'environ 8% et la contrainte à rupture d'environ 10% sans détériorer l'allongement.

### REFERENCES

[1] J. C. Rao et al., Acta Materialia 131, 206 (2017)
[2] W.-R. Wang et al., Intermetallics 26, 44 (2012)
[3] B. Li, B. Qian et al., Materials Letters 252, 88 (2019)
[4] J. M. Park et al., Kim, Materials Research Letters 8, 1 (2020)
[5] M. Song et al., Applied Materials Today 18, 100498 (2020)
[6] B. Gwalani et al., Materials Research Letters 7, 267 (2019)

## Revendications

1. Procédé de fabrication d'une pièce en alliage à haute entropie ou en alliage multicomposants par fabrication additive comprenant une étape au cours de laquelle une couche d'un mélange de poudres est localement fondue puis solidifiée, **caractérisé en ce que** le mélange de poudres comprend :
- des premières particules en un alliage à haute entropie ou en alliage multicomposants, et
- des deuxièmes particules en nitrure d'aluminium.

2. Procédé selon la revendication 1, **caractérisé en ce que** le mélange de poudres comprend entre 0,5% et 4% massique de deuxièmes particules.

3. Procédé selon l'une quelconque des revendications précédentes, **caractérisé en ce que** les deuxièmes particules ont une plus grande dimension entre 5nm et 5000nm.

4. Procédé selon l'une quelconque des revendications précédentes, **caractérisé en ce que** les deuxièmes particules sont en AlₓN_{y} et les rapports stœchiométriques x/y des atomes de Al et de N sont supérieurs à 0 et inférieur ou égal à 5, préférentiellement supérieur à 0 et inférieur ou égal à 2, préférentiellement de 1.

5. Procédé selon l'une quelconque des revendications précédentes, **caractérisé en ce que** les premières particules ont une plus grande dimension entre 10µm et 120µm, et de préférence entre 20µm et 65µm.

6. Procédé selon l'une quelconque des revendications précédentes, **caractérisé en ce que** l'alliage est un alliage de la famille 3d TM.

7. Procédé selon l'une quelconque des revendications précédentes, **caractérisé en ce que** l'alliage à haute entropie contient de l'Al et quatre éléments choisis parmi Co, Cr, Fe, Ni, Ti, Cu et Mn.

8. Procédé selon l'une quelconque des revendications précédentes, **caractérisé en ce que** l'alliage à haute entropie est AlₓCoCrFeNi, AlₓCoCuFeNi, AlₓCoCrFeTi, AlxCrCuFeNi, AlxCrFeCuCo AlxCrCoCuFeNi ou AlₓCoCrFeTi, AlxCoCrFeTiNi, ou AlxCoCrFeMnNi, plus préférentiellement avec x compris entre 0,1 et 3.

9. Procédé selon l'une quelconque des revendications précédentes, **caractérisé en ce que** le procédé de fabrication est un procédé de fusion laser sur lit de poudres ou un procédé de fusion sélective par faisceau d'électrons sur lit de poudres.

10. Procédée selon l'une quelconque des revendications précédentes, **caractérisé en ce que** le procédé comprend une étape de fourniture d'une poudre de premières particules en alliage à haute entropie HEA ou en alliage multicomposants CCA, une étape de fourniture d'une poudre de deuxième particules et une étape de mélange des premières particules avec les deuxièmes particules pour former le mélange de poudres.

11. Procédé selon l'une quelconque des revendications précédentes, **caractérisé en ce que** le mélange de poudres est réalisé dans un mélangeur dynamique 3D.

12. Procédé selon l'une quelconque des revendications précédentes, **caractérisé en ce que** les deuxièmes particules sont à la surface des premières particules.

13. Procédée selon l'une quelconque des revendications précédentes, **caractérisé en ce que** les deuxièmes particules ont une plus grande dimension entre 100 et 1000 nm, encore plus préférentiellement entre 200 et 600 nm.

14. Procédé selon l'une quelconque des revendications précédentes, **caractérisé en ce que** le mélange de poudres comprend entre 0,5% et 3% massique de deuxièmes particules.

15. Pièce en alliage à haute entropie ou CCA comprenant des précipités de nitrure d'aluminium.
